# EUROPÄISCHE PATENTSCHRIFT

(11) **EP 3 426 937 B1**
(45) Veröffentlichungstag und Bekanntmachung des Hinweises auf die Patenterteilung: **29.04.2020**
(21) Anmeldenummer: 17709050.3
(22) Anmeldetag: 06.03.2017
(51) Int. Cl.: F16B 25/00

(54) **SCHRAUBE**
SCREW
VIS

(30) Priorität: 09.03.2016 DE 102016203864
(43) Veröffentlichungstag der Anmeldung: 16.01.2019
(73) Patentinhaber: Schmid Schrauben Hainfeld Gesellschaft m.b.H., 3170 Hainfeld (AT)
(72) Erfinder: LEB, Gerhard, 3204 Kirchberg (AT); GEBERT, Andreas, 2571 Altenmarkt (AT)
(74) Vertreter: Patentanwälte Ruff, Wilhelm, Beier, Dauster & Partner mbB
(86) Internationale Anmeldenummer: PCT/EP2017/055188
(87) Internationale Veröffentlichungsnummer: WO 2017/153335

(56) Entgegenhaltungen:
- EP-A2- 2 273 134
- DE-A1- 19 860 085
- DE-A1-102014 205 464

## Beschreibung

Die Erfindung betrifft eine Schraube mit einem zylindrischen Schaft, wobei der Schaft wenigstens abschnittsweise mit einem Schraubengewinde, insbesondere einem Holzgewinde, versehen ist und wobei zwischen Gewindeflanken des Schraubengewindes wenigstens teilweise Erhebungen aus der zylindrischen Grundfläche des Schafts angeordnet sind.

Aus der deutschen Offenlegungsschrift DE 10 2014 205 464 A1 ist eine Schraube mit einem zylindrischen Schaft und einem Holzgewinde auf dem Schaft bekannt, wobei zwischen den Gewindeflanken des Schraubengewindes Erhebungen aus der zylindrischen Grundfläche des Schafts angeordnet sind. Die Erhebungen erstrecken sich jeweils über mehrere Gewindegänge und sind parallel zur Mittellängsachse des Schafts angeordnet. Die Erhebungen haben eine abgerundete, leistenähnliche Form. Die Erhebungen können in ihrer radialen Erstreckung kleiner sein als die radiale Erstreckung der Gewindeflanken des Schraubengewindes.

Mit der Erfindung soll eine Schraube hinsichtlich ihres Einschraubverhaltens und hinsichtlich ihrer Sprengwirkung bzw. Spaltwirkung im Holz verbessert werden.

Erfindungsgemäß ist hierzu eine Schraube mit einem zylindrischen Schaft, wobei der Schaft wenigstens abschnittsweise mit einem Schraubengewinde, insbesondere einem Holzgewinde, versehen ist und wobei zwischen Gewindeflanken des Schraubengewindes wenigstens teilweise Erhebungen aus der zylindrischen Grundfläche des Schafts angeordnet sind, vorgesehen, bei der die Erhebungen eine ovale oder elliptische Grundfläche aufweisen, bei der die Erhebungen eine konvex gekrümmte Oberfläche aufweisen und bei der die Erhebungen in einem Abstand von den jeweils benachbarten Gewindeflanken des Schraubengewindes angeordnet sind.

Durch Vorsehen von Erhebungen mit ovaler oder elliptischer Grundfläche, die eine konvex gekrümmte Oberfläche aufweisen und in einem Abstand von den jeweils benachbarten Gewindeflanken angeordnet sind, lässt sich ein verbessertes Einschraubverhalten der Schraube und auch eine geringere Sprengwirkung bzw. Spaltwirkung der Schraube erzielen. Die Erhebungen sorgen für eine Materialverdrängung während des Einschraubens, wodurch das Einschraubverhalten und vor allem das sogenannte Anbeißen der Schraube, also der Eingriff der Schraube in das Material zu Beginn des Einschraubvorgangs, verbessert werden. Dennoch beeinflussen die Erhebungen die Haltekraft des Gewindes nicht, da sie in einem Abstand von den jeweils benachbarten Gewindeflanken des Schraubengewindes angeordnet sind. Die erfindungsgemäße Schraube ist für Hartholz und Weichholz geeignet. In besonderer Weise ist sie für Buchenholz geeignet, insbesondere die sogenannte Baubuche, ein aus zahlreichen miteinander verklebten Einzelplatten aus Buche bestehendes Material.

In Weiterbildung der Erfindung ist eine längere Halbachse der ovalen oder elliptischen Grundfläche wenigstens einer Erhebung schräg zu einer Mittellängsachse des Schafts angeordnet.

In Weiterbildung der Erfindung ist die längere Halbachse in einem Winkel zwischen 2° und 75° zu einer Ebene angeordnet, die senkrecht zur Mittellängsachse liegt. Dabei wird jeweils der kleinere Winkel zu dieser Ebene gemessen.

In Weiterbildung der Erfindung ist die längere Halbachse der ovalen oder elliptischen Grundfläche parallel zu den Gewindeflanken angeordnet.

In Weiterbildung der Erfindung ist die längere Halbachse der ovalen oder elliptischen Grundfläche in der gleichen Richtung zur Mittellängsachse der Schraube geneigt wie die Gewindeflanken.

Die vorstehend genannten Maßnahmen verbessern das sogenannte Anbeißen der Schraube und sorgen gleichzeitig für eine geringere Sprengwirkung bzw. Spaltwirkung der Schraube. Wenn die längere Halbachse der ovalen oder elliptischen Grundfläche parallel zu den Gewindeflanken angeordnet ist oder die längere Halbachse der ovalen oder elliptischen Grundfläche in der gleichen Richtung zur Mittellängsachse der Schraube geneigt ist wie die Gewindeflanken, unterstützen die Erhebungen beim Einschrauben die Wirkung des Gewindes und sorgen dafür für ein besseres Anbeißen der Schraube. Durch die Erhebungen wird also die Bewegung des Schafts in seiner Längsrichtung beim Einschrauben unterstützt.

In Weiterbildung der Erfindung ist die längere Halbachse der ovalen oder elliptischen Grundfläche wenigstens einer Erhebung parallel zu einer Mittellängsachse des Schafts angeordnet.

Auch eine solche Anordnung der Erhebungen hat sich als vorteilhaft herausgestellt, beispielsweise auch dann, wenn sich Erhebungen in Umfangsrichtung gesehen abwechseln, deren längere Halbachse der Grundfläche einmal zur Mittellängsachse der Schraube geneigt ist und einmal parallel zur Mittellängsachse der Schraube angeordnet ist.

In Weiterbildung der Erfindung ist eine maximale Höhe der Erhebungen, gemessen in radialer Richtung zum Schaft, kleiner als die Höhe der Gewindeflanken und beträgt minimal 1/40 des Durchmessers des Schafts und maximal 1/10 des Durchmessers des Schafts.

Da die maximale Höhe der Erhebungen kleiner ist als die Höhe der Gewindeflanken, wird die Haltekraft des Gewindes nicht negativ beeinflusst. Die Erhebungen verursachen beim Einschrauben eine Materialverdrängung, die das Einschrauben erleichtert und das Anbeißen der Schraube im Material verbessert.

In Weiterbildung der Erfindung verändert sich über den Umfang des Schafts gesehen ein Winkel, den die längeren Halbachsen der Grundflächen der Erhebungen zur Mittellängsachse des Schafts von einer Erhebung zur nächsten Erhebung einnehmen.

In Weiterbildung der Erfindung verringert sich eine Höhe der Erhebungen an den Enden der längeren Halbachse flach auslaufend bis auf null.

In Weiterbildung der Erfindung ist die gesamte Oberfläche der Erhebungen konvex gekrümmt.

Auf diese Weise wird vermieden, dass die Erhebungen das Material, in das die Schraube eingeschraubt werden soll, verletzen. Vielmehr sorgen die Erhebungen lediglich für eine Verdrängung des Materials radial nach außen.

In Weiterbildung der Erfindung sind die Erhebungen in einem ersten Abschnitt des Gewindes vorgesehen, der sich an eine Spitze des Schafts anschließt.

Unmittelbar nach dem Aufsetzen der Schraube und dem Beginn des Einschraubvorgangs entfalten die Erhebungen dadurch ihre Wirkung und sorgen für ein besseres Anbeißen der Schraube.

In Weiterbildung der Erfindung sind die Erhebungen in einem zweiten Abschnitt des Gewindes vorgesehen, der an einem kopfseitigen Ende des Gewindes auf dem Schaft liegt.

Das Vorsehen der Erhebungen am kopfseitigen Ende des Gewindes hat vorteilhafte Auswirkungen auf die Sprengwirkung bzw. Spaltwirkung der Schraube.

In Weiterbildung der Erfindung ist eine erste der Erhebungen des ersten Abschnitts in einem Abstand von der Spitze des Schafts angeordnet, wobei der Abstand zwischen 1/10 des Durchmessers des Schafts und dem Durchmesser des Schafts liegt.

An der Spitze selbst sind dadurch keine Erhebungen vorgesehen, so dass die auf ein rasches Eindringen der Schraube ausgelegte Spitze der Schraube unbeeinflusst bleibt. Unmittelbar nach dem Aufsetzen und Eindrehen der Spitze kommt die Wirkung der Erhebungen dann zum Tragen.

In Weiterbildung der Erfindung liegt eine Länge des ersten und/oder zweiten Abschnitts des Gewindes, in dem die Erhebungen angeordnet sind, zwischen dem Durchmesser des Schafts und dem Dreifachen des Durchmessers des Schafts.

In Weiterbildung der Erfindung folgt auf das kopfseitige Ende des Gewindes ein Fräsabschnitt auf dem Schaft, wobei der Fräsabschnitt mit parallel zur Längsrichtung des Schafts verlaufenden oder wendelförmig angeordneten Fräsrippen versehen ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten und erläuternden Ausführungsformen lassen sich dabei in beliebiger Weise miteinander kombinieren, ohne den Rahmen der Erfindung zu überschreiten. In den Zeichnungen zeigen:
- Fig. 1: eine abschnittsweise Ansicht einer erfindungsgemäßen Schraube gemäß einer ersten Ausführungsform der Erfindung,
- Fig. 2: eine Ansicht auf die Schnittebene A-A in Fig. 1,
- Fig. 3: eine Ansicht auf die Schnittebene B-B in Fig. 1,
- Fig. 4: eine abschnittsweise isometrische Darstellung der Spitze einer erfindungsgemäßen Schraube gemäß einer weiteren Ausführungsform,
- Fig. 5: eine abschnittsweise Seitenansicht der Schraube der Fig. 4,
- Fig. 6: eine abschnittsweise isometrische Darstellung einer erfindungsgemäßen Schraube gemäß einer weiteren Ausführungsform der Erfindung,
- Fig. 7: eine abschnittsweise Seitenansicht der Schraube der Fig. 6,
- Fig. 8: eine Ansicht auf die Schnittebene A-A in Fig. 7 und
- Fig. 9: eine abschnittsweise Seitenansicht einer erfindungsgemäßen Schraube gemäß einer weiteren Ausführungsform der Erfindung.

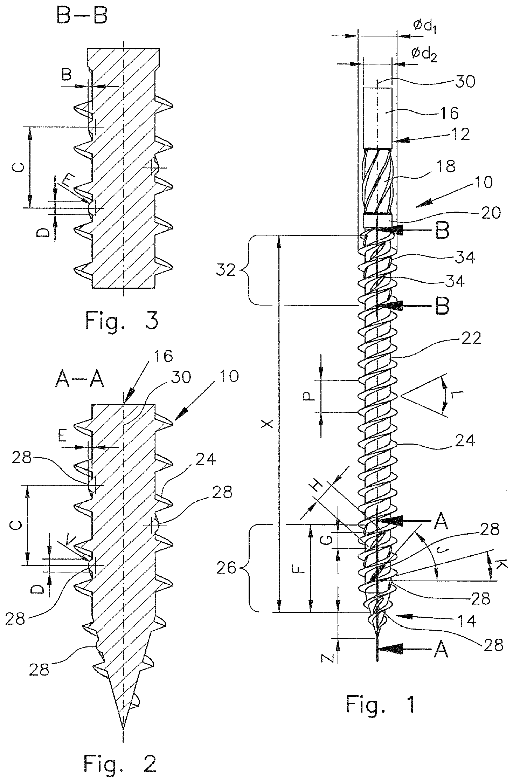

Die Darstellung der Fig. 1 zeigt abschnittsweise eine erfindungsgemäße Schraube 10 gemäß einer ersten Ausführungsform. Die Schraube 10 ist ohne ihren Schraubenkopf dargestellt, der eine Antriebsausbildung aufweist. Der Schraubenkopf kann verschiedenartigste Geometrien aufweisen.

Die Schraube 10 weist einen zylindrischen Schaft 12 auf, der an seinem dem Kopf gegenüberliegenden und in Fig. 1 unten dargestellten Ende mit einer konisch zulaufenden Schraubenspitze 14 versehen ist. Der Schaft 12 weist einen glatten Unterkopfabschnitt 16 auf. In Richtung auf die Schraubenspitze 14 zu folgt auf den Unterkopfabschnitt 16 ein Fräsabschnitt 18, in dem mehrere wendelförmig angeordnete Fräsrippen vorgesehen sind. Auf den Fräsabschnitt 18 folgt ein weiterer, glatter, zylindrischer Abschnitt 20, an den sich dann der Abschnitt 22 anschließt. Im Rahmen der Erfindung kann der Fräsabschnitt 18 entfallen, so dass dann also auf den Unterkopfabschnitt 16 unmittelbar der Abschnitt 20 und dann der Abschnitt 22 mit dem Schraubengewinde 24 folgt. Der Abschnitt 22 ist zylindrisch und ist mit einem Schraubengewinde 24 versehen, das im vorliegenden Fall als Holzgewinde ausgebildet ist. Das Schraubengewinde 24 erstreckt sich in dem Bereich der konisch zulaufenden Spitze 14 und endet erst unmittelbar vor dem punktförmig zulaufenden Ende der Spitze 14. Das Gewinde 24 ist bei der dargestellten Ausführungsform als zweigängiges Gewinde ausgebildet, kann aber auch als ein- oder mehrgängiges Gewinde ausgebildet sein.

Das Gewinde 24 weist einen Flankenwinkel L und eine Steigung P auf und entsprechend der Steigung P sind die Gewindegänge gegenüber einer horizontalen Ebene um einen Winkel K geneigt.

In einem Bereich 26, der einen Abschnitt des zylindrischen Schafts 22 und einen Abschnitt der konisch zulaufenden Spitze 14 enthält, sind mehrere Erhebungen 28 auf dem Schaft 22 vorgesehen. Der Bereich 26 hat eine Länge F, die zwischen dem Durchmesser D2 des Schafts 22 und dem Dreifachen des Durchmessers D2 liegen kann. Bei der dargestellten Ausführungsform beträgt die Länge F des Abschnitts 26 etwas weniger als das Dreifache des Durchmessers D2 des Schafts.

Die Erhebungen 28 weisen jeweils eine elliptische Grundfläche auf, wobei im Rahmen der Erfindung die Grundfläche der Erhebungen 28 auch oval sein kann. Die Erhebungen haben jeweils eine Länge H, wobei die Länge H der Länge der längeren Halbachse entspricht, sind schräg zur Mittellängsachse 30 der Schraube geneigt und in einem Winkel J zu einer horizontalen Ebene angeordnet. Der Winkel J kann bei der dargestellten Ausführungsform zwischen 2° und 75° liegen. Es ist Fig. 1 zu entnehmen, dass die Erhebungen 28 damit in derselben Richtung zur Mittellängsachse geneigt sind wie die Gewindegänge des Gewindes 24. Sind der Winkel K und der Winkel J gleich, liegen die Erhebungen 28 parallel zu den Gewindegängen des Gewindes 24. Die Anordnung der Erhebungen 28 schräg zur Mittellängsachse unterstützt das Einschrauben der Schraube 10 und verbessert dadurch das sogenannte Anbeißen der Schraube, also das Einschraubverhalten unmittelbar nach dem Aufsetzen der Spitze und dem Beginn des Einschraubvorgangs. Es ist Fig. 1 zu entnehmen, dass die längeren Halbachsen der jeweils elliptischen Grundflächen der Erhebungen 28 schräg zur Mittellängsachse 30 angeordnet sind.

Der Bereich 26 endet vor dem punktförmigen Ende der Spitze 14. Ein Abstand zwischen dem punktförmigen Ende der Spitze 14 und der ersten Erhebung 28 beträgt dabei Z. Z kann zwischen 1/10 des Durchmessers D2 des Schafts 16 und dem Durchmesser D2 des Schafts 16 liegen. Nach dem Aufsetzen der Schraube und dem Beginn der Drehung der Schraube greifen dadurch die Gewindegänge des Gewindes 24 sofort in das Material, in das die Schraube 10 eingeschraubt werden soll, ein. Kurz nach Beginn des Drehvorgangs gelangen die Erhebungen 28 bereits in Eingriff mit dem Material und verdrängen dieses nach außen. Dadurch wird das Einschrauben der Schraube 10 erleichtert, speziell wird das sogenannte Anbeißen der Schraube verbessert.

Wie bereits in der Fig. 1 zu erkennen ist, liegen die Erhebungen 28 auf dem Schaft 16 in dem Bereich zwischen den einzelnen Windungen des Gewindes 24. Die Erhebungen 28 weisen jeweils zu den Gewindeflanken des Gewindes 24 einen Abstand auf. Die Haltekraft des Gewindes 24 wird somit durch die Erhebungen 28 nicht beeinflusst.

Der Außendurchmesser der Schraube 10 ist in Fig. 1 mit D1 bezeichnet. Der Außendurchmesser D1 ist derjenige Durchmesser, der an den Außenkanten der Gewindegänge des Gewindes 24 gemessen wird und der in der Regel angegeben wird. Eine Schraube mit dem Durchmesser 6 mm weist daher in der Regel einen Außendurchmesser D1 von 6 mm auf.

Die Darstellung der Fig. 2 zeigt eine Ansicht auf die Schnittebene A-A in Fig. 1. Gut zu erkennen sind einzelne, angeschnittene Erhebungen 28. Es ist zu erkennen, dass die gesamte Oberfläche der Erhebungen 28 jeweils konvex gekrümmt ist. Es ist auch zu erkennen, dass eine Höhe der Erhebungen 28, also deren radiale Erstreckung ausgehend von der Mittellängsachse 30 der Schraube 10, deutlich kleiner ist als die Höhe der Gewindegänge des Gewindes 24. Speziell ist eine maximale Höhe der Erhebungen 28, gemessen in radialer Richtung zum Schaft 16, immer kleiner als die Höhe der Gewindeflanken des Gewindes 24 und beträgt minimal 1/40 des Durchmessers des Schafts 16 und maximal 1/10 des Durchmessers des Schafts 16. Die Höhe der Erhebungen 28 ist in Fig. 2 mit dem Buchstaben E bezeichnet. Mit dem Buchstaben V bezeichnet ist ein Krümmungsradius der Oberfläche der Erhebungen 28. Dieser Krümmungsradius liegt beispielsweise zwischen 0,2 und 1,5 mm bei einem Schaftdurchmesser D2 von 6 mm.

Neben dem Bereich 26 weist die Schraube 10, siehe Fig. 1, einen weiteren Bereich 32 auf, in den ebenfalls mehrere Erhebungen 34 mit ovaler bzw. elliptischer Grundfläche vorgesehen sind. Der Bereich 32 befindet sich am kopfseitigen Ende des Gewindes 24, also anschließend an den zylindrischen Bereich 20 des Schafts 16. Die Erhebungen 34 im Bereich 32 sind in gleicher Weise ausgebildet und angeordnet wie die Erhebungen 28 im Bereich 26. Dies ist in der Darstellung der Fig. 3 zu erkennen, die eine Ansicht auf die Schnittebene B-B in Fig. 1 darstellt.

Während die Erhebungen 28 im Bereich 26 für ein verbessertes Anbeißen der Schraube sorgen, bewirken die Erhebungen 34 im Bereich 32 vor allem eine verringerte Spaltwirkung bzw. Sprengwirkung der Schraube 10 beim Einschrauben.

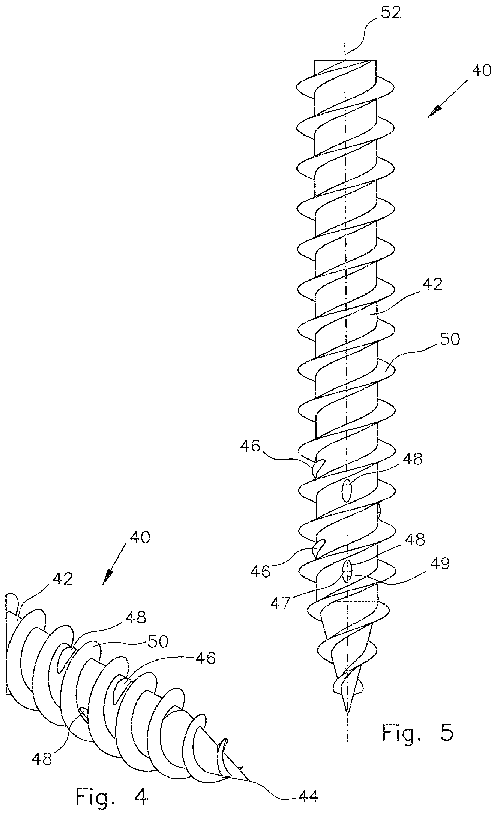

Die Darstellung der Fig. 4 zeigt eine abschnittsweise isometrische Darstellung einer erfindungsgemäßen Schraube 40 gemäß einer weiteren Ausführungsform der Erfindung. Dargestellt ist lediglich der Bereich der kegelförmigen Spitze sowie der sich daran anschließende zylindrische Bereich des Schafts 42. Zu erkennen ist, dass wie bei der Schraube 10 der Fig. 1 in einem gewissen Abstand von dem punktförmigen Ende 44 der Spitze der Schraube 40 mehrere Erhebungen 46, 48 auf dem Schaft 42 der Schraube 40 in dem Raum zwischen den Windungen des Gewindes 48 angeordnet sind. Es ist dabei Fig. 4 zu entnehmen, dass die Erhebungen 46, 48 jeweils eine elliptische Grundfläche aufweisen, die im Rahmen der Erfindung auch oval sein kann. Die Erhebungen 46 sind allerdings parallel zu den Gewindeflanken des Gewindes 50 angeordnet, wohingegen die Erhebungen 48 parallel zur Mittellängsachse 52 der Schraube 40 angeordnet sind. Dies ist auch in der Seitenansicht der Fig. 5 zu erkennen. Die Erhebungen 48 sind so angeordnet, dass ihre längere Halbachse 49 parallel zur Mittellängsachse 52 der Schraube 40, ihre kürzere Halbachse 47 hingegen senkrecht zur Mittellängsachse 52 angeordnet ist. Die Erhebungen 46 sind hingegen parallel zu den Gewindeflanken des Gewindes 50 angeordnet.

Gut zu erkennen ist in der Darstellung der Fig. 4 und der Fig. 5, dass die Erhebungen 46, 48 jeweils auf dem Schaft 42 in dem Raum zwischen den Gewindeflanken des Gewindes 50 angeordnet sind und dass die Erhebungen 46, 48 jeweils einen Abstand zu den Gewindeflanken des Gewindes 50 aufweisen.

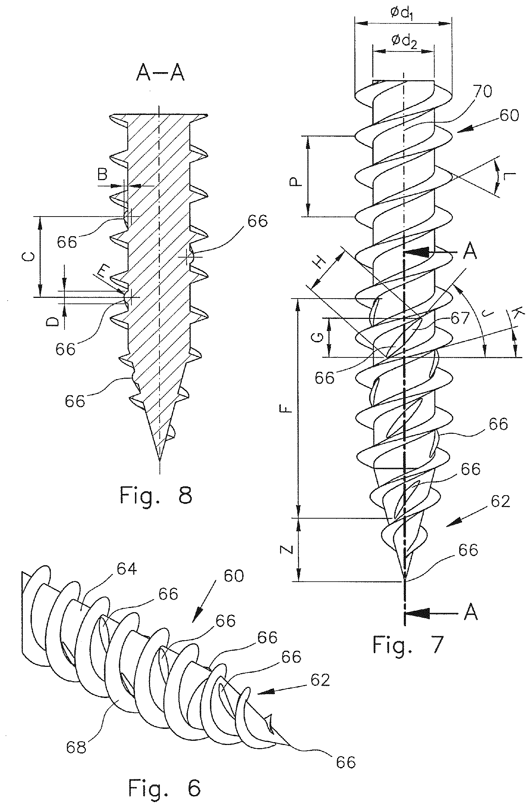

Die Darstellung der Fig. 6 zeigt eine weitere Ausführungsform einer erfindungsgemäßen Schraube 60, wobei die Schraube 60 lediglich abschnittsweise im Bereich ihrer konisch zulaufenden Spitze 62 sowie eines sich daran anschließenden zylindrischen Abschnitts des Schafts 64 dargestellt ist. In einem Abstand von dem punktförmigen Ende 66 der Spitze 62 sind auf dem Schaft 64 mehrere Erhebungen 66 mit elliptischer Grundfläche angeordnet. Die Erhebungen 66 sind jeweils schräg zu einer Mittellängsachse der Schraube angeordnet, wobei sie nicht parallel zu den Gewindeflanken des Gewindes 68, sondern in einem steileren Winkel als die Gewindeflanken des Gewindes 68 angeordnet sind.

Dies ist auch in der abschnittsweisen Seitenansicht der Fig. 7 zu erkennen. In einem Abstand Z von dem punktförmigen Ende 66 der Spitze 62 der Schraube 60 ist die erste Erhebung 66 mit elliptischer Grundfläche angeordnet. Die Erhebung 66 ist, wie ausgeführt wurde, mit ihrer längeren Halbachse 67 schräg zur Mittellängsachse 70 der Schraube 60 angeordnet. Die Erhebungen 66 sind in einem Bereich mit der Länge F angeordnet. Die Länge dieses Bereichs F liegt in den gleichen Grenzen wie anhand der Ausführungsform der Fig. 1 erläutert wurde.

Wie Fig. 2 zu entnehmen ist, ist der Winkel J, in dem die längere Halbachse 67 der elliptischen Grundfläche der Erhebungen 66 zu einer horizontalen Ebene angeordnet ist, auf der die Mittellängsachse 70 senkrecht steht, größer als ein Winkel K, den die Gewindeflanken zu dieser horizontalen Ebene einnehmen.

Die Darstellung der Fig. 8 zeigt eine Ansicht auf die Schnittebene A-A in Fig. 7. Gut zu erkennen sind die einzelnen Erhebungen 66 und dass deren gesamte Oberfläche konvex gekrümmt ist.

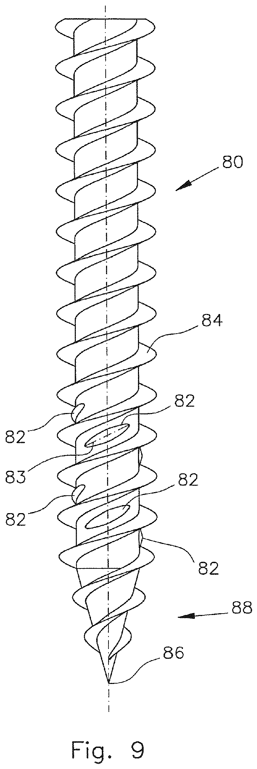

Die Darstellung der Fig. 9 zeigt eine weitere Ausführungsform einer erfindungsgemäßen Schraube 80. Auch die Schraube 80 weist mehrere Erhebungen 82 mit elliptischer Grundfläche auf, wobei eine längere Halbachse 83 der elliptischen Grundfläche der Erhebungen 82 jeweils parallel zu den Gewindeflanken eines Gewindes 84 der Schraube 80 angeordnet ist. Wie bei den zuvor erläuterten Ausführungsformen sind die Erhebungen 82 in einem Abstand von dem punktförmigen Ende 86 einer konisch zulaufenden Spitze 88 der Schraube 80 angeordnet.

## Patentansprüche

1. Schraube (10; 40; 60; 80) mit einem zylindrischen Schaft (16; 42; 64), wobei der Schaft wenigstens abschnittsweise mit einem Schraubengewinde (24; 50; 84), insbesondere einem Holzgewinde, versehen ist und wobei zwischen Gewindeflanken des Schraubengewindes wenigstens teilweise Erhebungen (28, 34; 46, 48; 66; 82) aus der zylindrischen Grundfläche des Schafts angeordnet sind, **dadurch gekennzeichnet, dass** die Erhebungen (28, 34; 46, 48; 66; 82) eine ovale oder elliptische Grundfläche aufweisen, dass die Erhebungen (28, 34; 46, 48; 66; 82) eine konvex gekrümmte Oberfläche aufweisen und dass die Erhebungen (28, 34; 46, 48; 66; 82) in einem Abstand von den jeweils benachbarten Gewindeflanken des Schraubengewindes (24; 50; 84) angeordnet sind.

2. Schraube nach Anspruch 1, **dadurch gekennzeichnet, dass** eine längere Halbachse der ovalen oder elliptischen Grundfläche wenigstens einer Erhebung (28, 34; 46, 48; 66; 82) schräg zu einer Mittellängsachse (30; 52; 70) des Schafts angeordnet ist.

3. Schraube nach Anspruch 2, **dadurch gekennzeichnet, dass** die längere Halbachse in einem Winkel (J) zwischen 2 Grad und 75 Grad zu einer Ebene angeordnet ist, die senkrecht zur Mittellängsachse liegt.

4. Schraube nach einem der Ansprüche 2 oder 3, **dadurch gekennzeichnet, dass** die längere Halbachse der ovalen oder elliptischen Grundfläche wenigstens einer Erhebung (82) parallel zu den Gewindeflanken angeordnet ist.

5. Schraube nach einem der Ansprüche 2 oder 3, **dadurch gekennzeichnet, dass** die längere Halbachse der ovalen oder elliptischen Grundfläche in der gleichen Richtung zur Mittellängsachse der Schraube geneigt ist, wie die Gewindeflanken.

6. Schraube nach einem der vorstehenden Ansprüche, **dadurch gekennzeichnet, dass** die längere Halbachse der ovalen oder elliptischen Grundfläche wenigstens einer Erhebung (48) parallel zu einer Mittellängsachse des Schafts angeordnet ist.

7. Schraube nach wenigstens einem der vorstehenden Ansprüche, **dadurch gekennzeichnet, dass** eine maximale Höhe der Erhebungen (28, 34; 46, 48; 66; 82), gemessen in radialer Richtung zum Schaft, kleiner ist als die Höhe der Gewindeflanken und minimal 1/40 des Durchmessers des Schafts und maximal 1/10 des Durchmessers des Schafts beträgt.

8. Schraube nach wenigstens einem der vorstehenden Ansprüche, **dadurch gekennzeichnet, dass** sich über den Umfang des Schafts gesehen ein Winkel, den die längeren Halbachsen der Grundflächen der Erhebungen zur Mittellängsachse des Schafts einnehmen, von einer Erhebung (46) zur nächsten Erhebung (48) verändert.

9. Schraube nach wenigstens einem der vorstehenden Ansprüche, **dadurch gekennzeichnet, dass** sich eine Höhe der Erhebungen (28, 34; 46, 48; 66; 82) an den Enden der längeren Halbachse flach auslaufend bis auf Null verringert.

10. Schraube nach wenigstens einem der vorstehenden Ansprüche, **dadurch gekennzeichnet, dass** die gesamte Oberfläche der Erhebungen (28, 34; 46, 48; 66; 82) konvex gekrümmt ist.

11. Schraube nach wenigstens einem der vorstehenden Ansprüche, **dadurch gekennzeichnet, dass** die Erhebungen (28, 34; 46, 48; 66; 82) in einem ersten Abschnitt (26) des Schafts vorgesehen sind, der sich an ein punktförmiges Ende (44; 66; 86) der Spitze (14; 62; 88) des Schafts anschließt.

12. Schraube nach einem der vorstehenden Ansprüche, **dadurch gekennzeichnet, dass** die Erhebungen (34) in einem zweiten Abschnitt (32) des Schafts vorgesehen sind, der an einem kopfseitigen Ende des Gewindes auf dem Schaft liegt.

13. Schraube nach Anspruch 11 oder 12, **dadurch gekennzeichnet, dass** eine erste der Erhebungen (28, 34; 46, 48; 66; 82) des ersten Abschnitts (26) in einem Abstand (z) von dem punktförmigen Ende der Spitze des Schafts angeordnet ist, wobei der Abstand (z) zwischen einem Zehntel des Durchmessers des Schafts und dem Durchmesser des Schafts liegt.

14. Schraube nach Anspruch 11, 12 oder 13, **dadurch gekennzeichnet, dass** eine Länge des ersten und/oder zweiten Abschnitts (26, 32) des Schafts, in dem die Erhebungen (28, 34; 46, 48; 66; 82) angeordnet sind, zwischen dem Durchmesser des Schafts und dem Dreifachen des Durchmessers des Schafts liegt.

15. Schraube nach Anspruch 11 und 12 und insbesondere einem der Ansprüche 13 und 14, **dadurch gekennzeichnet, dass** auf das kopfseitige Ende des Gewindes ein Fräsabschnitt (18) auf dem Schaft folgt, wobei der Fräsabschnitt mit parallel zur Mittellängsachse des Schafts verlaufenden oder wendelförmig angeordneten Fräsrippen versehen ist.

## Claims

1. Screw (10; 40; 60; 80), having a cylindrical shaft (16; 42; 64), wherein the shaft is provided at least in parts with a screw thread (24; 50; 84), in particular a wood thread, and wherein, between thread flanks of the screw thread, projections (28, 34; 46, 48; 66; 82) from the cylindrical base area of the shaft are disposed at least partially,
**characterized in that**
the projections (28, 34; 46, 48; 66; 82) have an oval or elliptical base area, **in that** the projections (28, 34; 46, 48; 66; 82) have a convex curved surface, and **in that** the projections (28, 34; 46, 48; 66; 82) are disposed at a distance from the respective adjacent thread flanks of the screw thread (24; 50; 84).

2. Screw according to claim 1, **characterized in that** a longer half-axis of the oval or elliptical base area of at least one projection (28, 34; 46, 48; 66; 82) is disposed obliquely in relation to a central longitudinal axis (30; 52; 70) of the shaft.

3. Screw according to claim 2, **characterized in that** the longer half-axis is at an angle (J) between 2 degrees and 75 degrees of angle in relation to a plane located perpendicular to the central longitudinal axis.

4. Screw according to any of claims 2 or 3, **characterized in that** the longer half-axis of the oval or elliptical base area of at least one projection (82) is in parallel to the thread flanks.

5. Screw according to any of claims 2 or 3, **characterized in that** the longer half-axis of the oval or elliptical base area is inclined in the same direction to the central longitudinal axis of the screw as the thread flanks.

6. Screw according to any of the preceding claims, **characterized in that** the longer half-axis of the oval or elliptical base area of at least one projection (48) is in parallel to a central longitudinal axis of the shaft.

7. Screw according to at least one of the preceding claims, **characterized in that** a maximum height of the projections (28, 34; 46, 48; 66; 82), measured in a radial direction relative to the shaft, is less than the height of the thread flanks and accounts for a minimum of 1/40 of the diameter of the shaft and a maximum of 1/10 of the diameter of the shaft.

8. Screw according to at least one of the preceding claims, **characterized in that**, as seen across the circumference of the shaft, an angle formed by the longer half-axes of the base areas of the projections to the central longitudinal axis of the shaft is variable from one projection (46) to the next projection (48).

9. Screw according to at least one of the preceding claims, **characterized in that** a height of the projections (28, 34; 46, 48; 66; 82) at the ends of the longer half-axis is flattening and decreasing down to zero.

10. Screw according to at least one of the preceding claims, **characterized in that** the entire surface of the projections (28, 34; 46, 48; 66; 82) has a convex curvature.

11. Screw according to at least one of the preceding claims, **characterized in that** the projections (28, 34; 46, 48; 66; 82) are provided in a first section (26) of the shaft, adjoining a point end (44; 66; 86) of the tip (14; 62; 88) of the shaft.

12. Screw according to any of the preceding claims, **characterized in that** the projections (34) are provided in a second section (32) of the shaft, located on a head-sided end of the thread on the shaft.

13. Screw according to claim 11 or 12, **characterized in that** a first one of the projections (28, 34; 46, 48; 66; 82) of the first section (26) is disposed at a distance (z) to the point end of the tip of the shaft, wherein the distance (z) is between one tenth of the diameter of the shaft and the diameter of the shaft.

14. Screw according to claim 11, 12 or 13, **characterized in that** a length of the first and/or second sections (26, 32) of the shaft, where the projections (28, 34; 46, 48; 66; 82) are disposed, is between the diameter of the shaft and three-fold the diameter of the shaft.

15. Screw according to claim 11 and 12, and in particular according to any of the claims 13 and 14, **characterized in that** the head-sided end of the thread is succeeded by a milling portion (18) on the shaft, wherein the milling portion is provided with milling fins extending in parallel to the central longitudinal axis of the shaft or arranged in a helical pattern.

## Revendications

1. Vis (10 ; 40 ; 60 ; 80) avec une tige cylindrique (16 ; 42 ; 64), dans laquelle la tige est munie au moins localement d'un filetage de vis (24 ; 50 ; 84), en particulier d'un filetage à bois, et dans laquelle, entre les flancs de filets du filetage de vis, des bossages (28, 34 ; 46, 48 ; 66 ; 82) partant de la surface de base cylindrique de la tige sont disposés au moins en partie, **caractérisée en ce que** les bossages (28, 34 ; 46, 48 ; 66 ; 82) présentent une surface de base ovale ou elliptique, **en ce que** les bossages (28, 34 ; 46, 48 ; 66 ; 82) présentent une surface de courbure convexe, et **en ce que** les bossages (28, 34 ; 46, 48 ; 66 ; 82) sont disposés à distance des flancs de filets respectivement adjacents du filetage de vis (24 ; 50 ; 84).

2. Vis selon la revendication 1, **caractérisée en ce qu'**un grand demi-axe de la surface de base ovale ou elliptique d'au moins un bossage (28, 34 ; 46, 48 ; 66 ; 82) est disposé en oblique par rapport à un axe longitudinal central (30 ; 52 ; 70) de la tige.

3. Vis selon la revendication 2, **caractérisée en ce que** le grand demi-axe est disposé selon un angle (J) compris entre 2 degrés et 75 degrés par rapport à un plan perpendiculaire à l'axe longitudinal central.

4. Vis selon l'une quelconque des revendications 2 et 3, **caractérisée en ce que** le grand demi-axe de la surface de base ovale ou elliptique d'au moins un bossage (82) est disposé en parallèle aux flancs de filets.

5. Vis selon l'une quelconque des revendications 2 et 3, **caractérisée en ce que** le grand demi-axe de la surface de base ovale ou elliptique est incliné dans la même direction par rapport à l'axe longitudinal central de la vis que les flancs de filets.

6. Vis selon l'une quelconque des revendications précédentes, **caractérisée en ce que** le grand demi-axe de la surface de base ovale ou elliptique d'au moins un bossage (48) est disposé en parallèle à un axe longitudinal central de la tige.

7. Vis selon au moins l'une des revendications précédentes, **caractérisée en ce qu'**une hauteur maximale des bossages (28, 34 ; 46, 48 ; 66 ; 82), mesurée dans la direction radiale par rapport à la tige, est inférieure à la hauteur des flancs de filets et mesure au minimum 1/40 du diamètre de la tige et au maximum 1/10 du diamètre de la tige.

8. Vis selon au moins l'une des revendications précédentes, **caractérisée en ce que**, vu sur la circonférence de la tige, un angle, adopté par les grands demi-axes des surfaces de base des bossages par rapport à l'axe longitudinal central de la tige, varie d'un bossage (46) à l'autre bossage (48).

9. Vis selon au moins l'une des revendications précédentes, **caractérisée en ce qu'**une hauteur des bossages (28, 34 ; 46, 48 ; 66 ; 82) diminue aux extrémités du grand demi-axe par aplatissement jusqu'à zéro.

10. Vis selon au moins l'une des revendications précédentes, **caractérisée en ce que** la surface totale des bossages (28, 34 ; 46, 48 ; 66 ; 82) présente une courbure convexe.

11. Vis selon au moins l'une des revendications précédentes, **caractérisée en ce que** les bossages (28, 34 ; 46, 48 ; 66 ; 82) sont prévus dans une première partie (26) de la tige adjacente à une extrémité en forme de point (44 ; 66 ; 86) de la pointe (14 ; 62 ; 88) de la tige.

12. Vis selon l'une quelconque des revendications précédentes, **caractérisée en ce que** les bossages (34) sont prévus dans une deuxième partie (32) de la tige située sur la tige à une extrémité côté tête du filetage.

13. Vis selon la revendication 11 ou 12, **caractérisée en ce qu'**un premier des bossages (28, 34 ; 46, 48 ; 66 ; 82) de la première partie (26) est disposé à une distance (z) de l'extrémité en forme de point de la pointe de la tige, la distance (z) étant comprise entre un dixième du diamètre de la tige et le diamètre de la tige.

14. Vis selon la revendication 11, 12 ou 13, **caractérisée en ce qu'**une longueur de la première et/ou deuxième partie (26, 32) de la tige où sont disposés les bossages (28, 34 ; 46, 48 ; 66 ; 82) est comprise entre le diamètre de la tige et trois fois le diamètre de la tige.

15. Vis selon les revendications 11 et 12 et en particulier l'une des revendications 13 et 14, **caractérisée en ce que** l'extrémité côté tête du filetage est suivie d'une partie fraisante (18) sur la tige, la partie fraisante étant munie de nervures fraisantes qui s'étendent en parallèle à l'axe longitudinal central de la tige ou sont disposées de manière hélicoïdale.
